# EUROPEAN PATENT APPLICATION

(11) **EP 0 606 051 A1**
(43) Date of publication of application: **13.07.1994**
(21) Application number: 93830517.4
(22) Date of filing: 22.12.1993
(51) Int. Cl.: H01M 4/90, H01M 4/86, B01J 23/52, C25B 11/04, H01M 8/10

(54) **Gas electrode, catalyst for gas electrode, and process for production thereof**

(30) Priority: 25.12.1992 JP 359077/92; 10.02.1993 JP 44434/93
(71) Applicant: Permelec Electrode Ltd, Fujisawa-shi Kanagawa (JP); DE NORA PERMELEC S.P.A., 20134 Milano (IT)
(72) Inventor: Shimamune, Takayuki, Machida-shi, Tokyo (JP); Nakajima, Yasuo, Suginami-ku, Tokyo (JP)
(74) Representative: Pellegri, Alberto

(57) **Abstract**

The present invention is directed to a gas electrode containing a catalyst containing gold particles dispersed and supported on a conductive oxide carrier such as titanium oxide, and, in addition, a gas electrode comprising a catalyst comprising electrically-conductive carbon, titanium oxide and gold particles, wherein the gold particles are dispersed on the titanium oxide and both the gold particles and titanium oxide are supported on the electrically-conductive carbon.

The present invention is also directed to such catalysts as well as processes for production of such gas electrodes and catalysts.

## Description

### FIELD OF THE INVENTION

The present invention is directed to a long-lasting gas electrode which is used for electrolysis and batteries. More particularly, the present invention relates to a gas electrode and a catalyst, wherein the gas electrode carries a catalyst metal thereon so that it permits stable continuous electrolysis in both an oxidizing atmosphere and a reducing atmosphere while it is depolarized with hydrogen gas.

The present invention is also directed to a process for production of the catalyst and gas electrode.

### BACKGROUND OF THE INVENTION

The recent development of a fuel cell of the polymeric solid electrolyte-type and an electrolytic cell of the energy saving-type has led to the development of a gas electrode for such uses. The gas electrode, when used in a fuel cell, is intended to reduce the oxygen gas at the cathode and to oxidize the hydrogen gas at the anode. On the other hand, when the gas electrode is used in an electrolytic cell, such is primarily intended for oxygen reduction. Presumably, the reason for this is that, in the case of electrolysis, oxidation at the anode dominates over reduction at the cathode, and the source of oxygen for reduction is easily available in the form of oxygen and air.

The study of fuel cells of the polymeric solid electrolyte-type is new, and only little has been understood with respect to the development of an electrode for oxidation of hydrogen gas which can be used at normal temperatures or in an aqueous solution. Therefore, the electrode which is used for oxidation of hydrogen gas has also been used as the electrode for reduction of oxygen gas. Such an electrode has been prepared from an electrically conductive carbon carrier and platinum or platinum black supported thereon. Since platinum and platinum black exhibit an outstanding catalytic performance for oxidation of hydrogen gas, the electrode has satisfactory characteristic properties. This is demonstrated by the fact that when it is used for a fuel cell of the polymeric solid electrolyte-type, it has an overvoltage of about 200 mV (depending on the amount supported), even at a current density as high as 100 A/dm² at 90-100°C, and it has an overvoltage as low as about 100 mV at a current density of about 30 A/dm² for ordinary electrolysis.

The above-mentioned electrode (supporting platinum or platinum black), however, is not satisfactory from the standpoint of long-term stability. As mentioned above, platinum is effective in oxidation of hydrogen gas, but it is not stable in a reducing atmosphere. It is well known that a platinum crucible exposed to red heat in a reducing flame is consumed rapidly and suffers cracking at grain boundaries due to crystal growth. Platinum, being supplied with hydrogen for oxidation of hydrogen, is like platinum placed in a reducing atmosphere, and is consumed more rapidly when it is supported on carbon where it easily functions as a reducing agent. For the electrode containing platinum or platinum black to remain stable for a relatively long period of time, it is desirable for the platinum to have a large surface area and to increase the amount of the platinum used. However, increasing the amount of platinum and surface area thereof have not been achieved technically and economically.

### SUMMARY OF THE INVENTION

The present invention is directed to eliminating the above-identified disadvantages associated with the conventional electrodes. Accordingly, it is an object of the present invention to provide a gas electrode and a catalyst to be used in the manufacture of the electrode, especially a hydrogen gas electrode, which remains stable for a long period of time. It is another object of the present invention to provide a process for producing such a gas electrode and catalyst.

More specifically, the present invention is directed to a gas electrode comprising a catalyst containing gold particles dispersed and supported on a conductive oxide carrier such as titanium oxide, and, in addition, a gas electrode comprising a catalyst comprising electrically-conductive carbon, titanium oxide and gold particles, wherein the gold particles are dispersed on the titanium oxide and both the gold particles and titanium oxide are supported on the electrically-conductive carbon.

The present invention is also directed to such catalysts as well as processes for production of such gas electrodes and catalysts.

### DETAILED DESCRIPTION OF THE INVENTION

The invention will be described in more detail below.

A characteristic feature of the present invention resides in the use of gold in place of platinum (the conventional metal used in catalysts) for electrodes, especially gas electrodes. That is, platinum does not have to be used in the present invention.

The oxidation of hydrogen gas is represented by the following reaction: H₂ → 2H⁺ + 2e⁻. The surface of an electrode catalyst is covered by hydrogen gas in a reducing atmosphere. As mentioned above, platinum, when used as a catalyst metal for the gas electrode, is capable of oxidation of hydrogen gas but lacks stability in a reducing atmosphere. Therefore, the present inventors carried-out extensive studies in search of a catalyst metal which has both the capability of oxidizing hydrogen gas and the desired stability in a reducing atmosphere. The result of these studies found that gold has these two characteristics, and this discovery has led to the present invention.

Despite the desirable properties of gold mentioned above, the use of such is expensive and gold is not as easily spread over a large area as platinum black. Thus, although gold has been used as a catalyst for hydrogen oxidation, it has never been used as an electrode catalyst despite its good properties.

As the result of extensive studies, the present inventors found that it is possible to provide a catalyst for gas electrodes which is both stable for a long period of time and comparable in hydrogen oxidation capability to platinum used as the conventional electrode catalyst. Such is accomplished when gold is given electrical conductivity and uniformly dispersed on a carrier containing a conductive oxide (such as titanium oxide), and, in addition, in such a manner that gold and titanium are coprecipitated and the coprecipitate mixture is heated to give an electrode substance supported on electrically-conductive carbon. The present invention also relates to a gas electrode using such catalysts.

When a gold salt is precipitated by hydration and the precipitates are fired in air, gold does not change into an oxide and, as a result, metallic gold simply separates-out. In contrast, a Group IV metal salt (e.g., titanium) and a Group V metal salt form, upon neutralization, gel-like oxide or hydroxide precipitates, which give rise to a crystalline oxide upon heating at 300-500°C in air or an inert reducing atmosphere.

Consequently, the present invention provides a gas electrode comprising a catalyst containing gold particles dispersed and supported on a conductive oxide carrier such as titanium oxide, and, in addition, a gas electrode comprising a catalyst which is composed of fine particles of metallic gold and titanium oxide, the latter enclosing the former in a high degree of dispersion and both being supported on electrically-conductive carbon (such as graphite) wherein the electrically-conductive carbon has a particle diameter of about 1-200 µm. The fine particles of metallic gold enclosed in titanium oxide can be obtained in the form of a coprecipitate suspension of titanium and gold by neutralizing an acidic solution containing a gold compound and a titanium compound. Then, the coprecipitate suspension is mixed with electrically-conductive carbon so that the former is supported on the latter. The present invention is also directed to such catalysts as well as provides for production of such gas electrodes and catalysts.

Titanium oxide, especially that in the rutile form, forms the Magnéli phase due to an oxygen lattice defect. Titanium oxide of the Magnéli phase has an electrical conductivity of about 10⁻² Ω-cm, and it increases in conductivity as it is doped with a small amount (preferably from 5 to 10 mol%) of at least one of tantalum and niobium having a different valence from titanium. Titanium oxide may also be doped with silicon. Since silicon is tetravalent like titanium, it would not have a direct affect on the electrical conductivity. Nevertheless, silicon enters the lattice to form the oxygen lattice defect, which leads to the Magnéli phase, because silicon has an ionic radius of 0.4 Å (for coordination number of 6, tetravalent), which is smaller than that of titanium (0.62 Å). Titanium oxide is one of the most desirable catalyst carriers, because it is extremely stable electrochemically in both oxidizing and reducing environments.

Another conductive oxide which can be used as a catalyst carrier in the present invention is tin oxide. However, it is not as preferred in conductivity to titanium oxide when used alone.

According to one embodiment of the present invention, a long-life gas electrode and catalyst are prepared by precipitating gold particles on a conductive oxide carrier. The process of preparing the gas electrode and catalyst involves the step of dispersing gold fine particles on the surface of the conductive oxide carrier.

A preferred process for making the gas electrode and catalyst is explained below based on the assumption that the conductive oxide carrier is titanium oxide. An aqueous solution of a titanium compound (such as titanium chloride) is mixed with an aqueous solution of gold compound (such as gold chloride). The mixed solution is neutralized with a base (such as ammonia) to give coprecipitates of gold hydroxide and titanium hydroxide in the form of sol which later turns to gel (Sol-gel method). The precipitates are allowed to stand for several hours so that they grow into particles about 10 µm in size. They are sintered so that the titanium hydroxide changes into titanium oxide and the gold hydroxide separates out in the form of metallic gold. Sintering removes water and gives rise to a porous titanium oxide, because the titanium oxide obtained by the sol-gel method contains a large amount of volatile component (water) as suggested by its chemical formula TiO₂·nH₂O or Ti(OH)₄. mH₂O. As the result of sintering, gold separates out in the form of fine particles on the surface of the porous titanium oxide. Thus, it is possible to obtain a gas electrode and catalyst containing a carrier having an extremely large surface area and gold fine particles dispersed thereon.

Alternatively, a preferred process includes preparing, by the sol-gel method, a porous powder of titanium oxide alone or doped with niobium oxide and/or tantalum oxide, and causing the powder to carry gold by any known method such as physical vapor deposition and thermal decomposition.

The thus prepared catalytic substance can be used as an electrode for ordinary electrolysis and fuel cells. Also, the electrode can be used for an oxygen depolarized cathode for the production of hydrogen peroxide. It is most suitable as a gas electrode in a fuel cell. The gas electrode is then formed by applying the catalytic substance to the surface of a sheet-like carrier formed from a mixture of conductive carbon powder and fluoroplastic powder (to make the carrier hydrophobic). Alternatively, the sheet-like carrier may be replaced by an ion-exchange membrane and the catalytic substance may be baked directly onto the membrane.

In addition, in a second embodiment of the present invention, a gas electrode and catalyst are prepared by dissolving a titanium compound, which is generally a water- soluble titanium compound such as a titanium chloride, an alkoxy titanate (e.g. tetrabutyl orthotitanate), and an organotitanium compound, in water acidified with hydrochloric acid, together with a gold compound, such as gold chloride and chloroauric acid, in an amount of from 1 to 10 mol% of the amount of the titanium compound (which also includes the weight of the titanium compound when doped). The resulting acidic solution is subsequently neutralized with a base, such as ammonia, with stirring. (Volatile ammonia is preferable to a metal base such as sodium hydroxide, which has to be removed by troublesome washing from the coprecipitates.) The base forms hydroxides of titanium and gold in the form of a coprecipitate floc to prepare a suspension. After washing with pure water by decantation or any other means, the suspension is thoroughly mixed with a powder of electrically-conductive carbon. Mixing should preferably be accompanied by heating to promote the growth of coprecipitates on the electrically-conductive carbon. Moreover, the solvent or washings may be evaporated so that the coprecipitates are firmly supported on the electrically-conductive carbon.

Then, the powder of electrically-conductive carbon carrying the coprecipitates of titanium and gold is rinsed with deionized water and dried. Finally, it is generally fired in an inert reducing atmosphere or air at 200-500°C, preferably, 300-400°C. Although carbon does not burn under this condition, it is desirable that heating be performed in an inert atmosphere purged with nitrogen for safety. Upon firing, the titanium compound in the coprecipitates loses water and becomes porous titanium oxide (because it contains a large amount of volatile component (water) as suggested by its chemical formula TiO₂·nH₂O or Ti(OH)₄·mH₂O). At the same time, the gold compound in the coprecipitates separates out in the form of fine particles of metallic gold on the surface of the porous titanium oxide. In this way, a product is obtained composed of a carrier having an extremely large surface area and fine particles of metallic gold supported thereon.

If the above-mentioned titanium oxide contains tantalum, niobium, or silicon, it would assume the rutile structure which is poor in crystallizability. In other words, it has oxygen lattice defects, forming the Magnéli phase, which gives rise to electrical conductivity. On the other hand, the gold compound is reduced to metallic gold at the temperature specified above, and, according to X-ray diffractometry, the metallic gold is in the form of spots dispersed in the titanium oxide having the rutile structure.

The thus prepared electrode catalyst can be used in an ordinary electrode for electrolysis and fuel cells. It is most suitable for gas electrodes in fuel cells. To form a gas electrode, such a catalyst is applied by coating or any other means onto a sheet formed from a mixture of electrically-conductive carbon powder and fluorocarbon resin (to impart water repellency). Alternatively, it may be baked directly onto an ion exchange membrane in place of said sheet.

To further illustrate the invention, and not by way of limitation, the following examples are provided. Unless otherwise indicated, all parts, percents, ratios or the like are by weight.

### Example 1

Titanium tetrachloride and tantalum pentachloride (in a molar ratio of 10:1) were dissolved in a 10% aqueous solution of hydrochloric acid. To the solution was added gold chloride in an amount equivalent to 10 mol% of the combined total of titanium and tantalum. The resulting solution was neutralized with stirring for precipitation with excess ammonia water which was added dropwise. After standing for 4 hours, the precipitates were filtered through a glass filter and washed with deionized water and finally calcined in air at 500°C for 1 hour. Upon analysis after crushing, the calcined product was found to be an oxide of rutile structure (Ti-Ta)O₂₋ₓ having fine particles of gold which had separated out on the surface thereof. It was also found to have an electrical resistance of about 10⁻² Ω-cm.

The thus obtained calcined product was bonded by baking, using fluoroplastic as a binder, to the surface of a layer formed on a cation exchange membrane ("Nafion 117" produced by E.I. Du Pont de Nemours and Company) by sintering graphite powder and fluoroplastic powder together.

The cation exchange membrane carrying the calcined product was used as an anode for electrolysis of a 15% aqueous solution of sulfuric acid in such a manner that the cation exchange membrane was in contact with the electrolyte and the calcined product was exposed to wet hydrogen gas which was supplied continuously. The potential corresponding to an overvoltage at 60°C and a current density of 100 A/dm² was 150 mV. The potential only slightly increased to 160 mV after continued electrolysis for 150 days.

### Comparative Example 1

The same procedure as in Example 1 was repeated to make an anode and to carry out electrolysis, except that gold chloride was not used. It was only possible to achieve a current density of 10 A/dm², with a potential of 300 mv.

### Comparative Example 2

The same procedure as in Example 1 was repeated to make an anode and to carry out electrolysis, except that gold chloride was replaced by chloroplatinic acid. The potential was 200 mV, which rose to 260 mV after continued electrolysis for 150 days.

### Example 2

A solution was prepared containing tetrabutyl orthotitanate and chloroauric acid (in a molar ratio of 10:1 as titanium and gold) in a 1:1 (by volume) mixture of ethanol and 10% hydrochloric acid. The solution was neutralized with ammonia water, which was added dropwise with stirring, to form a suspension. Excess ammonia water was added to complete the formation of the suspension. Then, graphite powder (10-200 µm in particle diameter) was added with stirring in an amount five times the weight of titanium. After standing for about 2 hours, the solids were separated from the liquid by means of a glass filter and washed with water. After drying, the solids were heated at 450°C for 2 hours in a nitrogen stream. Observations through a scanning electron microscope revealed that the graphite powder was covered with titanium oxide and metallic gold was scattered on the titanium oxide.

The thus obtained graphite powder carrying gold-containing titanium oxide was mixed with ordinary graphite powder and a fluorocarbon resin (as a binder). To form a catalyst layer, the mixture was applied to the uncoated side of a pitch-based carbon fiber cloth having a water-repellent layer formed thereon from a mixture of graphite powder (containing 5% fluorinated graphite powder) and a fluorocarbon resin (as a binder).

With a current collector of platinum-plated niobium connected, the carbon fiber cloth (as an anode) was installed in an electrolytic cell, and electrolysis of sulfuric acid was carried out by supplying the back side of the anode with hydrogen in an amount of 20% of the theoretical amount. The potential was 110 mV when the current density was 100 A/dm² at 60°C. The potential slightly increased to 120 mV after continued electrolysis for 150 days. Thus, it was found that the catalyst can be used stably in a hydrogen gas electrode over a long period of time without appreciable change in potential.

### Example 3

The same procedure as in Example 2 was repeated to prepare a gas electrode except that (1) coprecipitation was performed in the absence of ethanol with the tetra-butyl orthotitanate replaced by an aqueous solution containing titanium tetrachloride and tantalum pentachloride in a molar ratio of 10:1, and (2) the coprecipitates were heated at 400°C for 3 hours in a muffle furnace. The resulting gas electrode was tested in the same manner as in Example 2. The potential was 150 mV.

### Comparative Example 3

The same procedure as in Example 2 was repeated to prepare an anode except that the chloroauric acid was replaced by chloroplatinic acid. The anode marked a potential of 200 mV when used for electrolysis under the same condition as in Example 2. After continued electrolysis for 150 days, the potential increased to 260 mV.

As mentioned above, the present invention is embodied in a gas electrode which comprises a conductive oxide carrier and gold particles as a catalyst dispersed and supported on the carrier. Since gold is superior in durability to platinum in a reducing environment, this gas electrode remains almost unchanged in activity even after continued use in a reducing environment (such as hydrogen gas) for a long period of time. In addition, this gas electrode is comparable in activity to the conventional platinum gas electrode and the production cost of this gas electrode is lower than or comparable to that of the conventional platinum gas electrode.

The gas electrode of the present invention is stable because the conductive oxide carrier is made of tin oxide and, more preferably, titanium oxide (which is more durable than other oxides). Furthermore, the titanium oxide may be doped with tantalum, niobium, or silicon so as to improve its conductivity and durability. Gold being present in the form of fine particles on the carrier provides an electrode having high activity and a prolonged life.

According to the present invention, the gas electrode is preferably produced by adding a base to a solution of a titanium compound and gold compound to give coprecipitates of titanium hydroxide and gold hydroxide in the form of a gel, growing the gel, changing the titanium hydroxide and gold hydroxide into porous titanium oxide and metallic gold by sintering, and dispersing the metallic gold on the porous titanium oxide. This process offers an advantage of yielding a highly active, long lasting electrode because sintering removes water from titanium hydroxide to form porous titanium oxide, with fine particles of metallic gold dispersed on the porous titanium oxide.

Moreover, the present invention provides a catalyst for gas electrodes which comprises electrically-conductive carbon and titanium oxide and gold, the latter two resulting from the heating of a coprecipitated mixture of titanium and gold which has separated out on the electrically conductive carbon.

The catalyst of the present invention is produced by a process which comprises preparing an acidic solution of a titanium compound and a gold compound, adding a base to the acidic solution, thereby forming a coprecipitate suspension of said titanium compound and gold compound and causing the coprecipitate to separate out on electrically-conductive carbon, and heating the coprecipitate, thereby forming on the electrically-conductive carbon active particles composed of titanium oxide supporting metallic gold thereon. The heating of the coprecipitate dehydrates the titanium hydroxide, thereby forming porous titanium oxide which encloses the fine particles of metallic gold. This protects gold from aggregation and contributes to a high activity and a prolonged life. The process may be modified such that the titanium oxide is doped with tantalum, niobium, or silicon to improve its electrical conductivity and durability.

While the invention has been described in detail and with reference to specific embodiments thereof, it will be apparent to one skilled in the art that various changes and modifications can be made without departing from the spirit and scope thereof.

## Claims

1. A gas electrode comprising a conductive oxide carrier and a catalyst, wherein said catalyst comprises gold particles dispersed and supported on said conductive oxide carrier.

2. The gas electrode claimed in claim 1, wherein said conductive oxide carrier consists of titanium oxide.

3. The gas electrode claimed in claim 1, wherein said conductive oxide carrier is titanium oxide doped with at least one element selected from the group consisting of tantalum, niobium and silicon.

4. The gas electrode claimed in claim 1, wherein said conductive oxide carrier consists of tin oxide.

5. A gas electrode comprising a catalyst, wherein said catalyst comprises electrically-conductive carbon, titanium oxide, and gold particles, and wherein said gold particles are dispersed on said titanium oxide and both said gold particles and titanium oxide are supported on said electrically-conductive carbon.

6. The gas electrode claimed in claim 5, wherein said titanium oxide is doped with at least one element selected from the group consisting of tantalum, niobium, and silicon.

7. A catalyst for gas electrodes comprising gold particles dispersed and supported on a conductive oxide carrier.

8. The catalyst claimed in claim 7, wherein said conductive oxide carrier consists of titanium oxide.

9. The catalyst claimed in claim 7, wherein said conductive oxide carrier is titanium oxide doped with at least one element selected from the group consisting of tantalum, niobium, and silicon.

10. The catalyst claimed in claim 7, wherein said conductive oxide carrier consists of tin oxide.

11. A catalyst for gas electrodes comprising electrically-conductive carbon, titanium oxide and gold particles, wherein said gold particles are dispersed on said titanium oxide and both said gold particles and titanium oxide are supported on said electrically-conductive carbon.

12. The catalyst claimed in claim 11, wherein said titanium oxide is doped with at least one element selected from the group consisting of tantalum, niobium and silicon.

13. A process for producing a gas electrode, wherein said gas electrode comprises a catalyst comprising gold particles dispersed and supported on a conductive oxide carrier, and wherein said process comprises the step of dispersing said gold particles on said conductive oxide carrier.

14. The process claimed in claim 13, wherein said process of dispersing said gold particles on said conductive oxide carrier comprises the steps of:
(1) mixing an aqueous solution comprising a titanium compound with an aqueous solution consisting of a gold compound;
(2) neutralizing said mixed solution by adding a base thereto to provide co-precipitates of gold hydroxide and titanium hydroxide;
(3) filtering said co-precipitates; and
(4) sintering said co-precipitates to change said gold hydroxide and titanium hydroxide to gold particles and titanium oxide, respectively.

15. The process claimed in claim 14, wherein said aqueous solution comprising a titanium compound further comprises a compound selected from the group consisting of a tantalum compound, niobium compound and silicon compound.

16. A process for producing a catalyst for gas electrodes comprising the steps of:
(1) mixing an aqueous acidic solution comprising a titanium compound with an aqueous solution consisting of a gold compound to form a mixed solution wherein said gold compound is in an amount of 1-10 mol% of said titanium compound;
(2) neutralizing said mixed solution by adding a base to form a co-precipitate suspension of said titanium compound and gold compound; and
(3) mixing said co-precipitate suspension with an electrically-conductive carbon powder to form gold particles dispersed on titanium oxide and each is supported by said electrically-conductive carbon.

17. The process for producing a catalyst for gas electrodes claimed in claim 16, wherein said mixing (3) is accompanied by heating.

18. The process for producing a catalyst for gas electrodes claimed in claim 16, wherein said acidic aqueous solution further comprises at least one compound selected from the group consisting of tantalum, niobium and silicon.
